(19)

**Europäisches Patentamt**

**European Patent Office**

**Office européen des brevets**

(11) **EP 4 765 349 A1**

(12) **EUROPEAN PATENT APPLICATION**
published in accordance with Art. 153(4) EPC

(43) Date of publication:
**24.06.2026 Bulletin 2026/26**

(21) Application number: **24864033.6**

(22) Date of filing: **28.03.2024**

(51) International Patent Classification (IPC):
*H01M 50/103* (2021.01)     *H01M 50/258* (2021.01)

(52) Cooperative Patent Classification (CPC):
**H01M 50/133; H01M 4/13; H01M 4/5825;
H01M 10/0525; H01M 50/103; H01M 50/14;
H01M 50/258; H01M 50/55;** B60L 50/60;
B60R 16/033; H01M 2220/20; Y02E 60/10

(86) International application number:
**PCT/CN2024/084322**

(87) International publication number:
**WO 2025/055306 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023   CN 202322476888 U**

(71) Applicant: **Contemporary Amperex Technology
Co., Limited
Ningde, Fujian 352100 (CN)**

(72) Inventors:
• **LIN, Wenfa**
 **Ningde, Fujian 352100 (CN)**
• **HUANG, Biao**
 **Ningde, Fujian 352100 (CN)**
• **YE, Zetao**
 **Ningde, Fujian 352100 (CN)**

(74) Representative: **Gong, Jinping
CocreateIP
Neumarkter Straße 21
81673 München (DE)**

(54) **BATTERY CELL, BATTERY AND ELECTRIC APPARATUS**

(57)    Provided are a battery cell (20), a battery (100), and an electric apparatus. The battery cell (20) includes: a casing (21), where the casing (21) has a plurality of wall portions (211), the plurality of wall portions (211) include a first wall (201), the first wall (201) includes a main body portion (2011) and an edge portion (2012) connected to the main body portion (2011), the edge portion (2012) is connected to an adjacent wall portion (211), and the wall thickness of the edge portion (2012) is greater than the wall thickness of the main body portion (2011); an electrode assembly, where the electrode assembly is disposed in the casing (21); and an electrode terminal, where the electrode terminal is disposed on the wall portion (201) and is electrically connected to the electrode assembly.

FIG. 7

**Description**

CROSS-REFERENCE TO RELATED APPLICATIONS

The present application is based on and claims priority to Chinese Patent Application No. 202322476888.3, filed on September 12, 2023, the entire disclosure of which is incorporated herein by reference.

TECHNICAL FIELD

The present application relates to the field of battery technologies, and in particular, to a battery cell, a battery, and an electric apparatus.

BACKGROUND

In recent years, new energy vehicles have been developed with a great leap. In the field of electric vehicles, power batteries play an irreplaceably important role as a power source of the electric vehicle. A battery includes a box and a plurality of battery cells accommodated in the box. Because the battery is a core component of the new energy vehicle, there are high requirements on the battery in terms of both safety and a service life. However, during use of the battery, due to the design of a thin casing structure of the battery cell, the battery cell is not reliable enough, thereby affecting reliability of the battery.

SUMMARY

Embodiments of the present application provide a battery cell, a battery, and an electric apparatus, so that reliability of the battery cell and the battery can be effectively improved, thereby improving use performance of the battery cell and the battery.

According to a first aspect, an embodiment of the present application provides a battery cell, comprising: a casing, wherein the casing has a plurality of wall portions, the plurality of wall portions comprise a first wall, the first wall comprises a main body portion and an edge portion connected to the main body portion, the edge portion is connected to an adjacent wall portion, and the wall thickness of the edge portion is greater than the wall thickness of the main body portion; an electrode assembly, wherein the electrode assembly is disposed in the casing; and an electrode terminal, wherein the electrode terminal is disposed on the wall portion and is electrically connected to the electrode assembly.

In the foregoing technical solution, the first wall is disposed to comprise the main body portion and the edge portion connected to the main body portion, the edge portion is connected to the adjacent wall portion, and the wall thickness of the edge portion is greater than the wall thickness of the main body portion. In such a structure, regions with different thicknesses can be formed on the first wall. The main body portion is a main body part of the first wall and has a small thickness, which can meet a requirement of improving the battery energy density. The edge portion is a portion that is of the first wall and that is connected to the adjacent wall portion, and has a large thickness. Because a specific gap is generally reserved at an edge position of the electrode assembly and the casing, the wall thickness of the edge portion is greater than the wall thickness of the main body portion, which can make full use of the gap without occupying accommodating space required by the electrode assembly, and can enhance the strength of a joint (that is, a corner position of the casing) between the first wall and the adjacent wall portion. When the casing is extruded, a problem of insufficient strength at the corner position of the casing can be effectively reduced, to enhance anti-extrusion and anti-impact strength of the casing, thereby improving reliability of the battery cell and the battery.

In some embodiments of the present application, the area of the first wall is greater than the areas of the remaining wall portions.

In the foregoing technical solution, the area of the first wall is set to be greater than the areas of the remaining wall portions, that is, the first wall is a large surface wall of the casing, so that in such a manner, the strength of the large surface wall can be effectively enhanced, thereby increasing overall strength of the casing. In addition, when the large surface wall can meet strength requirements, the wall thickness of the main body portion of the large surface wall can be made thin, which saves materials, and can increase the accommodating space of the electrode assembly in the casing, thereby increasing the volume of the electrode assembly, and helping enhance the battery energy density of the battery cell.

In some embodiments of the present application, the wall thickness of at least a part of the edge portion is greater than or equal to the wall thickness of the adjacent wall portion.

In the foregoing technical solution, the wall thickness of at least a part of the edge portion is set to be greater than or equal to the wall thickness of the adjacent wall portion, so that the wall thickness of the edge portion is not less than that of any one of the plurality of wall portions, that is, the strength of the edge portion is greater than or equal to the strength of the adjacent wall portion. This can decrease a probability that the edge portion becomes a weak region in the casing, thereby decreasing a probability of insufficient strength at the corner position of the casing. It can be seen that in such a manner, a strength enhancement effect of the edge portion is good.

In some embodiments of the present application, the edge portion comprises a uniform-thickness portion and a gradation portion connected to the uniform-thickness portion, the uniform-thickness portion is connected to the adjacent wall portion, the gradation portion is connected to the main body portion, and in a direction in which the gradation portion is away from the uniform-thickness portion, the wall thickness of the gradation portion gradually decreases.

In the foregoing technical solution, the edge portion is disposed to comprise the uniform-thickness portion and the gradation portion connected to the uniform-thickness portion, so that the uniform-thickness portion can be connected to the main body portion through smooth transition by using the gradation portion. This helps decrease a probability of stress concentration between the main body portion and the edge portion, enhance structural stability of the first wall, and improve reliability of the first wall. Moreover, the gradation portion can also decrease a probability of a sharp structure such as a step appearing between the edge portion and the main body portion. This helps decrease a probability of damage to the electrode assembly in a process of mounting the electrode assembly into the casing.

In some embodiments of the present application, in a direction in which the main body portion points to the gradation portion, the size of the uniform-thickness portion is greater than the size of the gradation portion.

In the foregoing technical solution, the uniform-thickness portion in the edge portion mainly plays a role of enhancing the strength. In the direction in which the main body portion points to the gradation portion, the size of the uniform-thickness portion is set to be greater than the size of the gradation portion, so that the size occupied by the uniform-thickness portion in the edge portion is larger, and an effect of enhancing the strength is more significant, thereby bringing a better strength enhancement effect.

In some embodiments of the present application, in the direction in which the main body portion points to the gradation portion, the size of the uniform-thickness portion is $N$, and the size of the gradation portion is $M$, wherein $2\,\text{mm} \le N \le 15\,\text{mm}$, and $1\,\text{mm} \le M \le 6\,\text{mm}$.

In the foregoing technical solution, in the direction in which the main body portion points to the gradation portion 20122, the size $N$ of the uniform-thickness portion is set to be in the range of 2 mm to 15 mm, so that the strength enhancement effect brought by the uniform-thickness portion is good, and the first wall has high strength. In addition, impact on the electrode assembly can be reduced, which helps improve the battery energy density. The size $M$ of the gradation portion is set to be in the range of 1 mm to 6 mm, so that the transition effect brought by the gradation portion between the uniform-thickness portion and the main body portion is good. In addition, impact on the electrode assembly can be reduced, which helps improve the battery energy density.

In some embodiments of the present application, the electrode assembly is a lithium iron phosphate electrode assembly or a ternary lithium electrode assembly; when the electrode assembly is the lithium iron phosphate electrode assembly, $2\,\text{mm} \le N \le 10\,\text{mm}$, and $1\,\text{mm} \le M \le 3\,\text{mm}$; and when the electrode assembly the electrode assembly is the ternary lithium electrode assembly, $10\,\text{mm} < N \le 15\,\text{mm}$, and $3\,\text{mm} < M \le 6\,\text{mm}$.

In the foregoing technical solution, when the electrode assembly is the lithium iron phosphate electrode assembly, the size $N$ of the uniform-thickness portion may be one of 2 mm, 3 mm, 4 mm, 5 mm, 6 mm, 7 mm, 8 mm, 9 mm, and 10 mm, and the size $M$ of the gradation portion may be one of 1 mm, 2 mm, and 3 mm. When the electrode assembly is the ternary lithium electrode assembly, the size $N$ of the uniform-thickness portion may be one of 11 mm, 12 mm, 13 mm, 14 mm, and 15 mm, and the size $M$ of the gradation portion may be one of 4 mm, 5 mm, and 6 mm.

In some embodiments of the present application, a transition fillet is formed between the edge portion and the adjacent wall portion.

In the foregoing technical solution, the transition fillet is formed between the edge portion and the adjacent wall portion, so that the edge portion and the adjacent wall portion can be uniformly transitioned. This helps decrease the probability of stress concentration, improve the structural stability of the casing, and also enhance manufacturability of the casing.

In some embodiments of the present application, in a direction in which the main body portion points to the edge portion, the size of the edge portion is negatively correlated with the radius of the transition fillet.

In the foregoing technical solution, a smaller radius of the transition fillet indicates more significant stress concentration between the first wall and the adjacent wall portion and a higher strength requirement for the first wall. Therefore, the size of the edge portion is made large, so that the strength at the joint between the first wall and the adjacent wall portion can be enhanced, and a probability of insufficient strength on the first wall can be decreased. Similarly, a larger radius of the transition fillet indicates a better effect of reducing the stress concentration between the first wall and the adjacent wall portion and lower strength on the first wall, and therefore, the size of the edge portion can be made small.

In some embodiments of the present application, the radius of the transition fillet is $R$, and $2\,\text{mm} \le R \le 4\,\text{mm}$.

In the foregoing technical solution, the radius $R$ of the transition fillet is set to be in the range of 2 mm to 4 mm, so that a value of the radius of the transition fillet can be set to be in an appropriate range, and the effect of reducing the stress concentration between the first wall and the adjacent wall portion is better. In addition, a probability of a large corner occurring in the casing can be decreased, which helps dispose an electrode assembly with a larger volume in the casing, thereby improving the battery energy density.

In some embodiments of the present application, the electrode assembly is the lithium iron phosphate electrode assembly or the ternary lithium electrode assembly; when the electrode assembly is the lithium iron phosphate electrode assembly, $2\,mm \le R \le 3\,mm$; and when the electrode assembly is the ternary lithium electrode assembly, $3\,mm < R \le 4\,mm$.

In the foregoing technical solution, when the electrode assembly is the lithium iron phosphate electrode assembly, the radius $R$ of the transition fillet may be one of 2 mm, 2.2 mm, 2.4 mm, 2.6 mm, 2.8 mm, and 3.0 mm; and when the electrode assembly is the ternary lithium electrode assembly, the radius $R$ of the transition fillet may be one of 3.2 mm, 3.4 mm, 3.6 mm, 3.8 mm, and 4.0 mm.

In some embodiments of the present application, the plurality of wall portions comprise a second wall, the second wall is disposed at each of two ends of the first wall in a first direction, the electrode terminal is disposed on at least one of the remaining wall portions other than the second wall and the first wall, the edge portion is disposed at an end portion that is of the main body portion and that is close to the second wall, and the edge portion is connected to the second wall.

In the foregoing technical solution, in the first wall, the edge portion is disposed at each of the two ends of the main body portion in the first direction, and each of the two ends of the main body portion in the first direction is connected to the second wall through the edge portion. In this way, strength at the two ends of the main body portion can be enhanced, and when the first wall is extruded, strength at a connecting position between the first wall and the second wall is enhanced, and overall strength of the first wall can be further enhanced.

In some embodiments of the present application, the plurality of wall portions comprise a third wall, the third wall is disposed at one end of the first wall in a second direction, the third wall and the second wall are disposed adjacent to each other, the edge portion is also disposed at an end portion that is of the main body portion and that is close to the third wall, and the edge portion is connected to the third wall.

In the foregoing technical solution, in the first wall, each of the two ends of the main body portion can be connected to the second wall through the edge portion, and one of the other two opposite ends can also be connected to the third wall through the edge portion, and in such a manner, end portions of remaining pieces in the first wall other than an end portion adjacent to an end cover can be connected to adjacent wall portions through the edge portion, so that strength of the plurality of end portions of the first wall is enhanced, and the strength of the first wall can be further enhanced.

In some embodiments of the present application, the wall thickness of the third wall is greater than the wall thickness of the second wall, and the electrode terminal is disposed on the third wall.

In the foregoing technical solution, the wall thickness of the third wall is set to be greater than the wall thickness of the second wall, so that strength of the third wall is higher. Therefore, when the electrode terminal is disposed on the third wall, mounting reliability of the electrode terminal can be improved.

According to a second aspect, an embodiment of the present application further provides a battery, comprising the foregoing battery cell.

In the foregoing technical solution, in the casing of the battery cell, the first wall comprises the main body portion and the edge portion connected to the main body portion, the edge portion is connected to the adjacent wall portion, and the wall thickness of the edge portion is greater than the wall thickness of the main body portion, so that in such a manner, the strength of the first wall can be enhanced, to enhance anti-extrusion and anti-impact strength of the casing, thereby improving reliability of the battery.

According to a third aspect, an embodiment of the present application further provides an electric apparatus, comprising the foregoing battery cell or the foregoing battery.

In the foregoing technical solution, because the battery cell or the battery has high anti-extrusion and anti-impact strength, reliability of the battery cell or the battery is strong. This helps improve use stability of the electric apparatus.

DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.

FIG. 1 is a schematic structural diagram of a vehicle according to some embodiments of the present application;

FIG. 2 is an exploded view of a structure of a battery according to some embodiments of the present application;

FIG. 3 is a first schematic structural diagram of a casing according to some embodiments of the present application;

FIG. 4 is a second schematic structural diagram of a casing according to some embodiments of the present application;

FIG. 5 is a third schematic structural diagram of a casing according to some embodiments of the present application;

FIG. 6 is a schematic diagram taken along a line A-A in FIG. 5;

FIG. 7 is a partially enlarged schematic diagram of a position I in FIG. 6;

FIG. 8 is a schematic diagram taken along a line B-B in FIG. 5; and

FIG. 9 is a partially enlarged schematic diagram of a position II in FIG. 8.

Reference signs: 1000: vehicle; 100: battery; 10: box; 11: first box body; 12: second box body; 20: battery cell; 21: casing; 211: wall portion; 201: first wall; 2011: main body portion; 2012: edge portion; 20121: uniform-thickness portion; 20122: gradation portion; 202: second wall; 203: third wall: 203a: via hole; 212: transition fillet; 22: pressure relief portion; 2001: casing; 2001a: opening; 200: controller; 300: motor; X: first direction; Y: second direction; Z: third direction.

DESCRIPTION OF EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by a person skilled in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cell is generally classified into three types according to a packaging manner: a cylindrical battery cell, a square battery cell, and a pouch battery cell, which is not limited in the embodiments of the present application.

A battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box for encapsulating one or a plurality of battery cells or a plurality of battery modules. The box can prevent liquids or other foreign objects from affecting charging or discharging of the battery cells.

The battery cell includes a casing, an electrode assembly, and an electrolyte, and the casing is configured to accommodate the electrode assembly and the electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is coated on a surface of the positive electrode current collector. The positive electrode current collector not coated with the positive electrode active substance layer protrudes from the positive electrode current collector coated with the positive electrode active substance layer, and the positive electrode current collector not coated with the positive electrode active substance layer is a positive electrode tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is coated on a surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative electrode tab. The negative electrode current collector may be made of copper, and the negative electrode active substance may be carbon, silicon, or the like. To ensure that a large current passes through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be of a wound structure or a laminated structure, and the embodiments of the present application are not limited thereto.

In recent years, new energy vehicles have been developed with a great leap. In the field of electric vehicles, power batteries play an irreplaceably important role as a power source of the electric vehicle. A battery includes a box and a plurality of battery cells accommodated in the box. Because the battery is a core component of the new energy vehicle, there are high requirements on the battery in terms of both safety and a cycle service life.

In a general power battery, in order to enable the battery to achieve sufficient power, the plurality of battery cells in the box of the battery are usually stacked in an arrangement manner, and end plates are disposed on battery cells at two ends. However, the battery cell includes a casing, and most casings are designed to have a thin casing structure, to improve battery energy density. Therefore, when the casing is extruded by one or more of the end plate, the battery box, and adjacent battery cells, the casing is prone to insufficient strength, especially a corner position of the casing is more prone to insufficient strength, which increases a probability of damage to the casing, and greatly reduces reliability of the battery cell, affecting reliability of the battery. Consequently, use performance of the battery is greatly reduced, and a service life of the battery is also shortened.

Based on the above considerations, in order to resolve the problem of insufficient strength of the casing of the battery cell, the inventor designs a battery cell, including a casing, an electrode assembly, and an electrode terminal. The casing has a plurality of wall portions, the plurality of wall portions include a first wall, the first wall includes a main body portion and an edge portion connected to the main body portion, the edge portion is connected to an adjacent wall portion, and the wall thickness of the edge portion is greater than the wall thickness of the main body portion. The electrode assembly is disposed in the casing. The electrode terminal is disposed on the wall portion and is electrically connected to the electrode assembly.

In the battery cell of such a structure, the first wall is disposed to include the main body portion and the edge portion connected to the main body portion, the edge portion is connected to the adjacent wall portion, and the wall thickness of the edge portion is greater than the wall thickness of the main body portion. In such a structure, regions with different thicknesses can be formed on the first wall. The main body portion is a main body part of the first wall and has a small thickness, which can meet a requirement of improving the energy density of the battery. The edge portion is a portion that is of the first wall and that is connected to the adjacent wall portion, and has a large thickness. Because a specific gap is generally reserved at an edge position of the electrode assembly and the casing, the wall thickness of the edge portion is greater than the wall thickness of the body portion, which can make full use of the gap without occupying accommodating space required by the electrode assembly, and can improve the strength of a joint (that is, a corner position of the casing) between the first wall and the adjacent wall portion. When the casing is extruded, a problem of insufficient strength at the corner position of the casing can be effectively reduced, to improve anti-extrusion and anti-impact strength of the casing, thereby improving reliability of the battery cell and the battery.

The battery disclosed in the embodiments of the present application may be, but not limited to, used in an electric apparatus such as a vehicle, a ship, or an aircraft. A power supply system of the electric apparatus with the battery cell, the battery, and the like disclosed in the present application may be used. In this way, it is beneficial to expand a range of application of the battery cell.

Provided in the embodiments of the present application is an electric apparatus using a battery or a battery cell as a power source. The electric apparatus may be, but is not limited to, a mobile phone, a tablet, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric apparatus in an embodiment of the present application is a vehicle 1000.

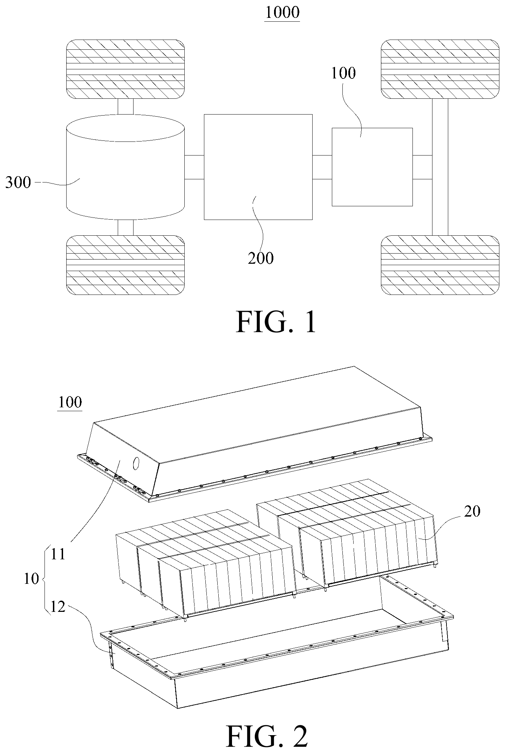

FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

FIG. 2 is an exploded view of a structure of a battery 100 according to some embodiments of the present application. The battery 100 includes a box 10 and a plurality of battery cells 20. The battery cells 20 are configured to be accommodated in the box 10. Here, the box 10 is configured to provide assembly space for the battery cells 20, and the box 10 may have various structures. In some embodiments, the box 10 may include a first box body 11 and a second box body 12, the first box body 11 and the second box body 12 cover each other, and the first box body 11 and the second box body 12 jointly define the assembly space for accommodating the battery cell 20. The second box body 12 may be of a hollow structure with an opening end, the first box body 11 may be of a plate-shaped structure, and the first box body 11 covers an opening side of the second box body 12, so that the first box body 11 and the second box body 12 jointly define the assembly space. Alternatively, the first box body 11 and the second box body 12 each may be of a hollow structure with an opening side, and an opening side of the first box body 11 covers an opening side of the second box body 12. Certainly, the box 10 formed by the first box body 11 and the second box body 12 may be in a plurality of shapes, for example, a cylinder or a cuboid.

In the battery 100, the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a current converging component for implementing an electrical connection between the plurality of battery cells 20.

In some embodiments, the battery 100 includes a plurality of rows of battery cells 20, the plurality of rows of battery cells 20 may be arranged in a length direction of the box 10, and each row of battery cells 20 includes a plurality of battery cells 20 arranged in a width direction of the box 10. Alternatively, the plurality of rows of battery cells 20 may be arranged in the width direction of the box 10, and each row of battery cells 20 includes a plurality of battery cells 20 arranged in the length direction of the box 10.

Here, each battery cell 20 may be a secondary battery or a primary battery, or may be a lithium-sulfur battery, a sodium-ion battery, or a magnesium-ion battery, but is not limited thereto. The battery cell 20 may be in the shape of cylinder, flat body, rectangular cuboid, etc. For example, the shape of the battery cell 20 is a cylinder.

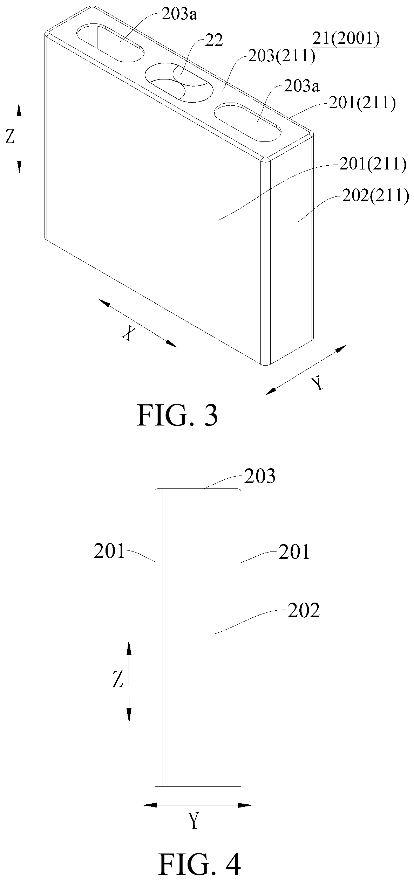

According to some embodiments of the present application, FIG. 3 shows a battery cell 20 according to some embodiments of the present application, including a casing 21, an electrode assembly (not shown in the figure), and an electrode terminal (not shown in the figure). The casing 21 has a plurality of wall portions 211, the plurality of wall portions 211 include a first wall 201, the first wall 201 includes a main body portion 2011 and an edge portion 2012 connected to the main body portion 2011, the edge portion 2012 is connected to an adjacent wall portion 211, and the wall thickness of the edge portion 2012 is greater than the wall thickness of the main body portion 2011. The electrode assembly is disposed in the casing 21. The electrode terminal is disposed on the wall portion 211 and is electrically connected to the electrode assembly.

The casing 21 is a thin-casing structural member, and is configured to accommodate the electrode assembly and an electrolyte. The casing 21 may include, but is not limited to, an aluminum casing and a steel casing. The casing 21 has the plurality of wall portions 211, and the plurality of wall portions 211 are connected to jointly define accommodating space for accommodating the electrode assembly and the electrolyte. The first wall 201 may be a wall portion 211 whose strength needs to be enhanced, the main body portion 2011 may be a main body part of the first wall 201, and the edge portion 2012 may be an edge part of the first wall 201. For example, the edge portion 2012 may be disposed at at least one end of the main body portion 2011. Because the edge portion 2012 has a wall thickness greater than that of the main body portion 2011 and is connected to the adjacent wall portion 211, the edge portion 2012 can play a role of enhancing strength at a connecting position between the first wall 201 and the adjacent wall portion 211.

The electrode terminal may be a component to which the electrode assembly and an external conductor are connected. For example, the electrode terminal may be a pole. There are at least two electrode terminals, including a positive terminal and a negative terminal, to connect a positive electrode and a negative electrode of an external electric device.

In the foregoing technical solution, the first wall 201 is disposed to include the main body portion 2011 and the edge portion 2012 connected to the main body portion 2011, the edge portion 2012 is connected to the adjacent wall portion 211, and the wall thickness of the edge portion 2012 is greater than the wall thickness of the main body portion 2011. In such a structure, regions with different thicknesses can be formed on the first wall 201. The main body portion 2011 is a main body part of the first wall 201 and has a small thickness, which can meet a requirement of improving the battery energy density. The edge portion 2012 is a portion that is of the first wall 201 and that is connected to the adjacent wall portion 211, and has a large thickness. Because a specific gap is generally reserved at an edge position of the electrode assembly and the casing 21, the wall thickness of the edge portion 2012 is greater than the wall thickness of the main body portion 2011, which can make full use of the gap without occupying accommodating space required by the electrode assembly, and can enhance the strength of a joint (that is, a corner position of the casing 21) between the first wall 201 and the adjacent wall portion 211. When the casing 21 is extruded, a problem of insufficient strength at the corner position of the casing 21 can be effectively reduced, to enhance anti-extrusion and anti-impact strength of the casing 21, thereby improving reliability of the battery cell 20 and the battery 100.

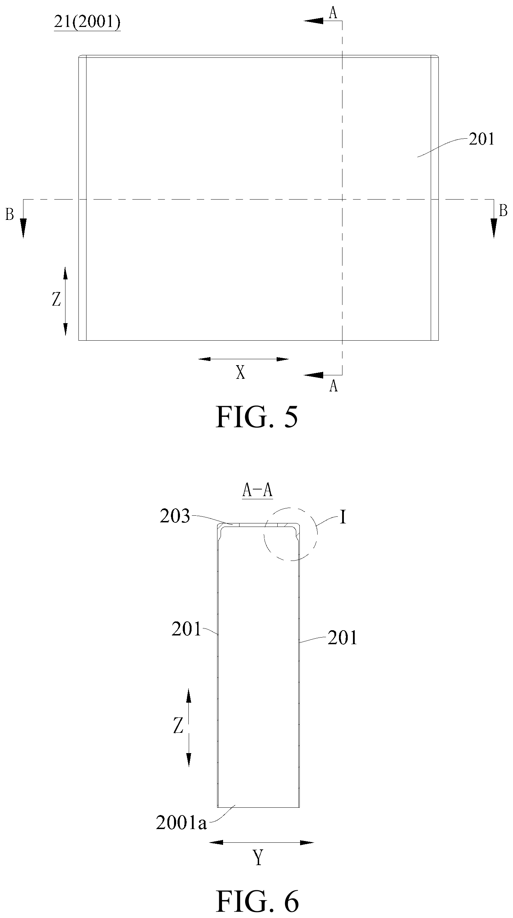

In some embodiments of the present disclosure, as shown in FIG. 3 and FIG. 5, the area of the first wall 201 is greater than the areas of the remaining wall portions 211. It can be understood that the first wall 201 is a large surface wall of the casing 21, and the strength of the first wall 201 is lower than the strength of the other wall portions 211. In other words, the first wall 201 may be a relatively weak wall portion 211 of the casing 21. For example, when the casing 21 is a square aluminum casing, the first wall 201 may be two sidewalls with large areas.

In the foregoing technical solution, the area of the first wall 201 is set to be greater than the areas of the remaining wall portions 211, that is, the first wall 201 is a large surface wall of the casing 21. In such a manner, the strength of the large surface wall can be effectively enhanced, and overall strength of the casing 21 is further enhanced. In addition, when the large surface wall can meet strength requirements, the wall thickness of the main body portion 2011 of the large surface wall can be made thin, to save materials, and increase the accommodating space of the electrode assembly in the casing 21, thereby increasing the volume of the electrode assembly, and helping enhance the battery energy density of the battery cell 20.

In some embodiments of the present application, the wall thickness of at least a part of the edge portion 2012 is greater than or equal to the wall thickness of the adjacent wall portion 211.

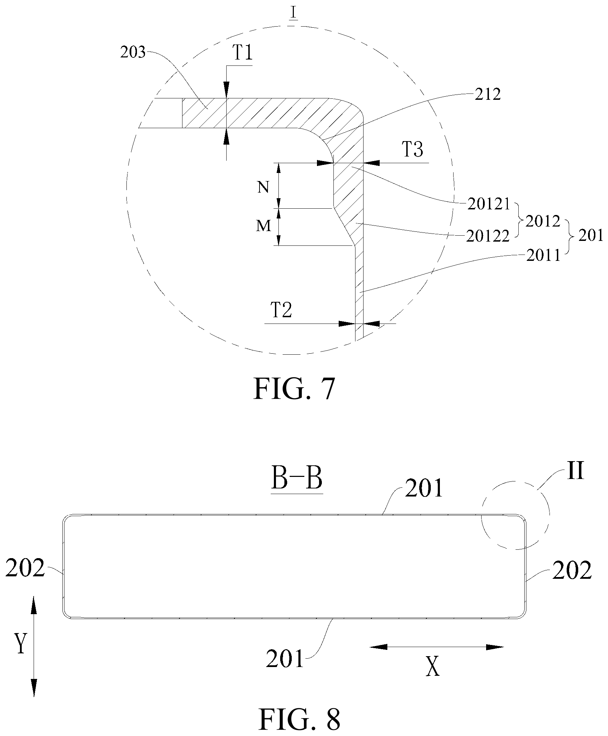

It can be understood that the wall thickness of at least a part of the edge portion 2012 may be equal to the wall thickness of the adjacent wall portion 211 (referring to FIG. 7, the wall thickness of the adjacent wall portion 211 is T1, the wall thickness of at least a part of the edge portion 2012 is T3, and T1 and T3 are equal). In such a manner, transition between the edge portion 2012 and the adjacent wall portion 211 can be uniform, to improve manufacturability of the casing 21. In addition, the wall thickness of the edge portion 2012 is equal to the wall thickness of the adjacent wall portion 211, so that strength of each of the edge portion 2012 and the adjacent wall portion 211 is high, thereby enhancing overall strength of the casing 21.

The wall thickness of at least a part of the edge portion 2012 may alternatively be greater than the wall thickness of the adjacent wall portion 211. In such a manner, the strength of the edge portion 2012 is greater than the strength of the main body portion 2011 and the adjacent wall portion 211, so that the edge portion 2012 has high strength, and an anti-extrusion and anti-impact effect at a corner position is good when the casing 21 is extruded.

In the foregoing technical solution, the wall thickness of at least a part of the edge portion 2012 is set to be greater than or equal to the wall thickness of the adjacent wall portion 211, so that the wall thickness of the edge portion 2012 is not less than that of any one of the plurality of wall portions 211, that is, the strength of the edge portion 2012 is greater than or equal to the strength of the adjacent wall portion 211. This can decrease a probability that the edge portion 2012 becomes a weak region in the casing 21, thereby decreasing a probability of insufficient strength at the corner position of the casing 21.

It can be seen that in such a manner, a strength enhancement effect of the edge portion 2012 is good.

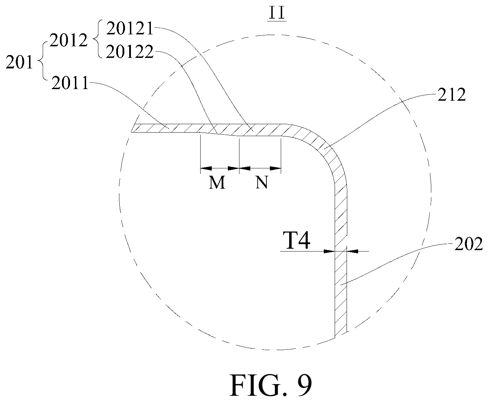

In some embodiments of the present application, as shown in FIG. 7 and FIG. 9, the edge portion 2012 includes a uniform-thickness portion 20121 and a gradation portion 20122 connected to the uniform-thickness portion 20121, the uniform-thickness portion 20121 is connected to the adjacent wall portion 211, the gradation portion 20122 is connected to the main body portion 2011, and in a direction in which the gradation portion 20122 is away from the uniform-thickness portion 20121, the wall thickness of the gradation portion 20122 gradually decreases.

The uniform-thickness portion 20121 may be a portion that is of the edge portion 2012 and that has a uniform and equal thickness.

The gradation portion 20122 may be a portion that is of the edge portion 2012 and that has a thickness gradually changing.

Referring to FIG. 3 to FIG. 7, the casing 21 may have a first direction X, a second direction Y, and a third direction Z. The first direction X, the second direction Y, and the third direction Z are perpendicular to each other in pairs, and the first direction X, the second direction Y, or the third direction Z may be one of a length direction, a width direction, and a height direction of the casing 21. An end portion of the first wall 201 in the first direction X and an end portion of the first wall 201 in the third direction Z are connected to the wall portion 211. Referring to FIG. 6 and FIG. 7, in the first wall 201, an end portion of the main body portion 2011 in the third direction Z is connected to the wall portion 211 through the edge portion 2012, the direction in which the gradation portion 20122 is away from the uniform-thickness portion 20121 may be set in the third direction Z, and the wall thickness of the gradation portion 20122 may be a size in the first direction X. Referring to FIG. 8 and FIG. 9, in the first wall 201, an end portion of the main body portion 2011 in the first direction X is connected to the wall portion 211 through the edge portion 2012, the direction in which the gradation portion 20122 is away from the uniform-thickness portion 20121 may be set in the first direction X, and the wall thickness of the gradation portion 20122 may be a size in the second direction Y.

A surface that is of the gradation portion 20122 and that is located on an inner side of the casing 21 may include, but is not limited to, an inclined surface and an arc-shaped surface.

In the foregoing technical solution, the edge portion 2012 is disposed to include the uniform-thickness portion 20121 and the gradation portion 20122 connected to the uniform-thickness portion 20121, so that the uniform-thickness portion 20121 can be connected to the main body portion 2011 through smooth transition by using the gradation portion 20122. This helps decrease a probability of stress concentration between the main body portion 2011 and the edge portion 2012, enhance structural stability of the first wall 201, and improve reliability of the first wall 201. Moreover, the gradation portion 20122 can also decrease a probability of a sharp structure such as a step appearing between the edge portion 2012 and the main body portion 2011. This helps reduce a probability of damage to the electrode assembly in a process of mounting the electrode assembly in the casing 21.

In some embodiments of the present application, as shown in FIG. 7 and FIG. 9, in a direction in which the main body portion 2011 points to the gradation portion 20122, the size $N$ of the uniform-thickness portion 20121 is greater than the size $M$ of the gradation portion 20122.

Referring to FIG. 6 and FIG. 7, in the first wall 201, the end portion of the main body portion 2011 in the third direction Z is connected to the wall portion 211 through the edge portion 2012, and the direction in which the main body portion 2011 points to the gradation portion 20122 may be in the third direction Z. Referring to FIG. 8 and FIG. 9, in the first wall 201, the end portion of the main body portion 2011 in the first direction X is connected to the wall portion 211 through the edge portion 2012, and the direction in which the main body portion 2011 points to the gradation portion 20122 may be in the first direction X.

In the foregoing technical solution, the uniform-thickness portion 20121 in the edge portion 2012 mainly plays a role of enhancing the strength. In the direction in which the main body portion 2011 points to the gradation portion 20122, the size $N$ of the uniform-thickness portion 20121 is set to be greater than the size $M$ of the gradation portion 20122, so that the size occupied by the uniform-thickness portion 20121 in the edge portion 2012 is larger, and an effect of enhancing the strength is more significant, thereby bringing a better strength enhancement effect.

In some embodiments of the present application, as shown in FIG. 7 and FIG. 9, in the direction in which the main body portion 2011 points to the gradation portion 20122, the size of the uniform-thickness portion 20121 is $N$, and the size of the gradation portion 20122 is $M$, where $2 \text{ mm} \leq N \leq 15 \text{ mm}$, and $1 \text{ mm} \leq M \leq 6 \text{ mm}$.

The size $N$ of the uniform-thickness portion 20121 may include, but is not limited to, any one of 2 mm, 3 mm, 4 mm, 5 mm, 6 mm, 7 mm, 8 mm, 9 mm, 10 mm, 11 mm, 12 mm, 13 mm, 14 mm, 15 mm. In this solution, if the size $N$ of the uniform-thickness portion 20121 is less than 2 mm, the strength enhancement effect achieved is poor, which is not conducive to significantly enhancing the strength of the first wall 201. If the size $N$ of the uniform-thickness portion 20121 is greater than 15 mm, although a better strength enhancement effect can be achieved, the size $N$ of the uniform-thickness portion 20121 is large, which increases impact on the electrode assembly and is not conducive to mounting a large-sized electrode assembly, thereby affecting the battery energy density.

The size $M$ of the gradation portion 20122 may include, but is not limited to, any one of 1 mm, 2 mm, 3 mm, 4 mm, 5 mm, and 6 mm. In this solution, if the size $M$ of the gradation portion 20122 is less than 1 mm, the transition effect achieved is poor, and the effect of reducing stress concentration is poor. If the size *M* of the gradation portion 20122 is greater than 6 mm, a better transition effect can be achieved, but the size *M* of the gradation portion 20122 is large, which increases impact on the electrode assembly and is not conducive to mounting a large-sized electrode assembly, thereby affecting the battery energy density.

In the foregoing technical solution, in the direction in which the main body portion 2011 points to the gradation portion 20122, the size *N* of the uniform-thickness portion 20121 is set to be in the range of 2 mm to 15 mm, so that the strength enhancement effect brought by the uniform-thickness portion 20121 is good, and the first wall 201 has high strength. In addition, impact on the electrode assembly can be reduced, which helps improve the battery energy density. The size *M* of the gradation portion 20122 is set to be in the range of 1 mm to 6 mm, so that the transition effect brought by the gradation portion 20122 between the uniform-thickness portion 20121 and the main body portion 2011 is good. In addition, impact on the electrode assembly can be reduced, which helps improve the battery energy density.

In some embodiments of the present application, the electrode assembly is a lithium iron phosphate electrode assembly or a ternary lithium electrode assembly; when the electrode assembly is the lithium iron phosphate electrode assembly, $2\ mm \leq N \leq 10\ mm$, and $1\ mm \leq M \leq 3\ mm$; and when the electrode assembly the electrode assembly is the ternary lithium electrode assembly, $10\ mm < N \leq 15\ mm$, and $3\ mm < M \leq 6\ mm$.

In the foregoing technical solution, when the electrode assembly is the lithium iron phosphate electrode assembly, the size *N* of the uniform-thickness portion 20121 may be one of 2 mm, 3 mm, 4 mm, 5 mm, 6 mm, 7 mm, 8 mm, 9 mm, and 10 mm, and the size *M* of the gradation portion 20122 may be one of 1 mm, 2 mm, and 3 mm. When the electrode assembly is the ternary lithium electrode assembly, the size *N* of the uniform-thickness portion 20121 may be one of 11 mm, 12 mm, 13 mm, 14 mm, and 15 mm, and the size *M* of the gradation portion 20122 may be one of 4 mm, 5 mm, and 6 mm.

In some embodiments of the present application, as shown in FIG. 7 and FIG. 9, a transition fillet 212 is formed between the edge portion 2012 and the adjacent wall portion 211.

In the foregoing technical solution, the transition fillet 212 is formed between the edge portion 2012 and the adjacent wall portion 211, so that there is uniform transition between the edge portion 2012 and the adjacent wall portion 211. This helps decrease the probability of stress concentration, improve the structural stability of the casing 21, and also enhance manufacturability of the casing 21.

In some embodiments of the present application, in a direction in which the main body portion 2011 points to the edge portion 2012, the size of the edge portion 2012 is negatively correlated with the radius of the transition fillet 212. That is, a larger radius of the transition fillet 212 indicates a smaller size of the edge portion 2012, and a smaller radius of the transition fillet 212 indicates a larger size of the edge portion 2012.

In the foregoing technical solution, a smaller radius of the transition fillet 212 indicates more significant stress concentration between the first wall 201 and the adjacent wall portion 211 and a higher strength requirement for the first wall 201. Therefore, the size of the edge portion 2012 is made large, so that the strength at the joint between the first wall 201 and the adjacent wall portion 211 can be enhanced, and a probability of insufficient strength on the first wall 201 can be decreased. Similarly, a larger radius of the transition fillet 212 indicates a better effect of reducing the stress concentration between the first wall 201 and the adjacent wall portion 211 and lower strength on the first wall 201, and therefore, the size of the edge portion 2012 can be made small.

In some embodiments of the present application, the radius of the transition fillet 212 is R, and $2\ mm \leq R \leq 4\ mm$.

The radius *R* of the transition fillet 212 may include, but is not limited to, one of 2 mm, 3 mm, and 4 mm. If the radius *R* of the transition fillet 212 is less than 2 mm, the effect of decreasing a probability of stress concentration is poor. If the radius *R* of the transition fillet 212 is greater than 4 mm, space at the corner position in the casing 21 is increased, and because the electrode assembly needs to avoid the corner position of the casing 21, it is not conducive to disposing an electrode assembly with a larger volume.

In the foregoing technical solution, the radius *R* of the transition fillet 212 is set to be in the range of 2 mm to 4 mm, so that a value of the radius of the transition fillet 212 can be set to be in an appropriate range, and the effect of reducing the stress concentration between the first wall 201 and the adjacent wall portion 211 is better. In addition, a probability of a large corner occurring in the casing 21 can be decreased, which helps dispose an electrode assembly with a larger volume in the casing 21, thereby improving the battery energy density.

In some embodiments of the present application, the electrode assembly is the lithium iron phosphate electrode assembly or the ternary lithium electrode assembly; when the electrode assembly is the lithium iron phosphate electrode assembly, $2\ mm \leq R \leq 3\ mm$; and when the electrode assembly is the ternary lithium electrode assembly, $3\ mm < R \leq 4\ mm$.

In the foregoing technical solution, when the electrode assembly is the lithium iron phosphate electrode assembly, the radius *R* of the transition fillet 212 may be one of 2 mm, 2.2 mm, 2.4 mm, 2.6 mm, 2.8 mm, and 3.0 mm; and when the electrode assembly is the ternary lithium electrode assembly, the radius R of the transition fillet 212 may be one of 3.2 mm, 3.4 mm, 3.6 mm, 3.8 mm, and 4.0 mm.

In some embodiments of the present application, as shown in FIG. 3, FIG. 4, FIG. 8, and FIG. 9, the plurality of wall portions 211 include a second wall 202, the second wall 202 is disposed at each of two ends of the first wall 201 in the first direction X, the electrode terminal is disposed on at least one of the remaining wall portions 211 other than the second wall 202 and the first wall 201, the edge portion 2012 is disposed at an end portion that is of the main body portion 2011 and that is close to the second wall 202, and the edge portion 2012 is connected to the second wall 202.

It can be understood that two ends of the main body portion 2011 are connected to the second wall 202 through the edge portion 2012. For example, there may be two first walls 201 that are disposed opposite to each other, and the second wall 202 is disposed at each of two opposite ends of each first wall 201. For example, the casing 21 is a square casing, the first wall 201 may be two large surface sidewalls of the casing 21, and the second wall 202 is two small surface sidewalls of the casing 21. The remaining wall portions 211 other than the second wall 202 and the first wall 201 may be a top wall and a bottom wall, that is, at least one electrode terminal may be disposed on the top wall or the bottom wall of the casing 21.

In the foregoing technical solution, in the first wall 201, the edge portion 2012 is disposed at each of the two ends of the main body portion 2011 in the first direction X, and each of the two ends of the main body portion 2011 in the first direction X is connected to the second wall 202 through the edge portion 2012. In this way, strength at the two ends of the main body portion 2011 can be enhanced, and when the first wall 201 is extruded, strength at a connecting position between the first wall 201 and the second wall 202 is enhanced, and overall strength of the first wall 201 can be further enhanced.

In some embodiments of the present disclosure, as shown in FIG. 3, FIG. 4, FIG. 6, and FIG. 7, the plurality of wall portions 211 include a third wall 203, the third wall 203 is disposed at one end of the first wall 201 in the second direction Y, the third wall 203 and the second wall 202 are disposed adjacent to each other, the edge portion 2012 is also disposed at an end portion that is of the main body portion 2011 and that is close to the third wall 203, and the edge portion 2012 is connected to the third wall 203.

Referring to FIG. 3 and FIG. 6, the casing 21 may include a casing body 2001 and an end cover (not shown in the figure), the end cover 2001 covers an opening 2001a of the casing body, one of the plurality of wall portions 211 is formed on the end cover, the remaining wall portions are formed on the casing body 2001, the first wall 201 may be two opposite casing walls in the casing body 2001, the second wall 202 may be the other two opposite casing walls in the casing body 2001, and the third wall 203 is a top wall or a bottom wall, that is, the main body portion 2011 of the first wall 201 can also be connected to the third wall 203 through the edge portion 2012.

In the foregoing technical solution, in the first wall 201, each of the two ends of the main body portion 2011 can be connected to the second wall 202 through the edge portion 2012, and one of the other two opposite ends can also be connected to the third wall 203 through the edge portion 2012. In such a manner, end portions of remaining pieces in the first wall 201 other than an end portion adjacent to an end cover can be connected to adjacent wall portions 211 through the edge portion 2012, so that strength of the plurality of end portions of the first wall 201 is enhanced, and the strength of the first wall 201 can be further enhanced.

In some embodiments of the present application, as shown in FIG. 7 and FIG. 9, the wall thickness of the third wall 203 is greater than the wall thickness of the second wall 202, and the electrode terminal is disposed on the third wall 203.

Referring to the foregoing descriptions, the third wall 203 may be the wall portion 211 opposite to the opening 2001a of the casing 2001. For example, the third wall 203 is a bottom wall. The third wall 203 may be the wall portion 211 that cooperates with the opening 2001a of the casing 2001. For example, the third wall 203 is a top wall. Referring to FIG. 7 and FIG. 9, the wall thickness of the third wall 203 may be T1, the wall thickness of the second wall 202 may be T4, and T1 is greater than T4.

Optionally, the third wall 203 may be provided with a via hole 203a, and the electrode terminal passes through the via hole 203a. A quantity of via holes 203a is equal to a quantity of electrode terminals, and the via holes 203a are in a one-to-one correspondence with the electrode terminals. For example, if there are two electrode terminals, there are two via holes 203a.

Optionally, the third wall 203 may be provided with a pressure relief portion 22, and the pressure relief portion 22 is an explosion-proof valve.

In the foregoing technical solution, the wall thickness of the third wall 203 is set to be greater than the wall thickness of the second wall 202, so that strength of the third wall 203 is higher. Therefore, when the electrode terminal is disposed on the third wall 203, mounting reliability of the electrode terminal can be improved.

According to an embodiment of the present application, the casing 21 of the battery cell 20 is an aluminum casing, the first wall 201 of the aluminum casing is a large surface wall, the wall thickness at a corner of a junction between a large surface wall and an adjacent small surface wall is uniformly thinned from 0.5 mm to 0.3 mm, and the wall thicknesses at corners of junctions between a large surface wall and adjacent small surface walls are equal (referring to the thickness T4 in FIG. 9), thereby enhancing casing strength in a case of extrusion by a module end plate.

According to the embodiment of the present application, the casing 21 of the battery cell 20 is an aluminum casing, the first wall 201 of the aluminum casing is a large surface wall, the wall thickness at a corner of a junction between a large surface wall and an adjacent top wall is uniformly thinned from 1.5 mm to 0.3 mm (referring to FIG. 7, the wall thickness T3 is 1.5 mm, and the wall thickness T2 is 0.3 mm), and the wall thickness at corners of junctions between a large surface wall and adjacent top walls are equal (referring to the thickness T1 in FIG. 7), thereby enhancing anti-impact strength in a case of extrusion by a module end plate.

According to a second aspect, an embodiment of the present application further provides a battery 100, including the foregoing battery cell 20.

In the foregoing technical solution, in the casing 21 of the battery cell 20, the first wall 201 includes the main body portion 2011 and the edge portion 2012 connected to the main body portion 2011, the edge portion 2012 is connected to the adjacent wall portion 211, and the wall thickness of the edge portion 2012 is greater than the wall thickness of the main body portion 2011, so that in such a manner, the strength of the first wall 201 can be enhanced, to enhance anti-extrusion and anti-impact strength of the casing 21, thereby improving reliability of the battery 100.

According to a third aspect, an embodiment of the present application further provides an electric apparatus, including the foregoing battery cell 20 or the foregoing battery 100.

In the foregoing technical solution, because the battery cell 20 or the battery 100 has high anti-extrusion and anti-impact strength, reliability of the battery cell 20 or the battery 100 is strong. This helps improve use stability of the electric apparatus.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

**Claims**

1. A battery cell, comprising:

   a casing, wherein the casing has a plurality of wall portions, the plurality of wall portions comprises a first wall, the first wall comprises a main body portion and an edge portion connected to the main body portion, the edge portion is connected to an adjacent wall portion, and the wall thickness of the edge portion is greater than the wall thickness of the main body portion;
   an electrode assembly, wherein the electrode assembly is disposed in the casing; and
   an electrode terminal, wherein the electrode terminal is disposed on the wall portion and is electrically connected to the electrode assembly.

2. The battery cell according to claim 1, wherein the area of the first wall is greater than the areas of the remaining wall portions.

3. The battery cell according to claim 1 or 2, wherein the wall thickness of at least a part of the edge portion is greater than or equal to the wall thickness of the adjacent wall portion.

4. The battery cell according to any one of claims 1 to 3, wherein the edge portion comprises a uniform-thickness portion and a gradation portion connected to the uniform-thickness portion, the uniform-thickness portion is connected to the adjacent wall portion, the gradation portion is connected to the main body portion, and in a direction in which the gradation portion is away from the uniform-thickness portion, the wall thickness of the gradation portion gradually decreases.

5. The battery cell according to claim 4, wherein in a direction in which the main body portion points to the gradation portion, the size of the uniform-thickness portion is greater than the size of the gradation portion.

6. The battery cell according to claim 5, wherein in the direction in which the main body portion points to the gradation portion, the size of the uniform-thickness portion is $N$, and the size of the gradation portion is $M$; and

$$2 \text{ mm} \leq N \leq 15 \text{ mm, and } 1 \text{ mm} \leq M \leq 6 \text{ mm.}$$

7. The battery cell according to claim 6, wherein the electrode assembly is a lithium iron phosphate electrode assembly or a ternary lithium electrode assembly;

when the electrode assembly is the lithium iron phosphate electrode assembly, $2\,mm \leq N \leq 10\,mm$, and $1\,mm \leq M \leq 3\,mm$; and

when the electrode assembly the electrode assembly is the ternary lithium electrode assembly, $10\,mm < N \leq 15\,mm$, and $3\,mm < M \leq 6\,mm$.

8.  The battery cell according to any one of 1 to 7, wherein a transition fillet is formed between the edge portion and the adjacent wall portion.

9.  The battery cell according to 8, wherein in a direction in which the main body portion points to the edge portion, the size of the edge portion is negatively correlated with the radius of the transition fillet.

10. The battery cell according to claim 8 or 9, wherein the radius of the transition fillet is R, and $2\,mm \leq R \leq 4\,mm$.

11. The battery cell according to claim 10, wherein the electrode assembly is the lithium iron phosphate electrode assembly or the ternary lithium electrode assembly;

    when the electrode assembly is the lithium iron phosphate electrode assembly, $2\,mm \leq R \leq 3\,mm$; and
    when the electrode assembly the electrode assembly is the ternary lithium electrode assembly, $3\,mm < R \leq 4\,mm$.

12. The battery cell according to any one of claims 1 to 11, wherein the plurality of wall portions comprise a second wall, the second wall is disposed at each of two ends of the first wall in a first direction, the electrode terminal is disposed on at least one of the remaining wall portions other than the second wall and the first wall, the edge portion is disposed at an end portion that is of the main body portion and that is close to the second wall, and the edge portion is connected to the second wall.

13. The battery cell according to claim 12, wherein the plurality of wall portions comprise a third wall, the third wall is disposed at one end of the first wall in a second direction, the third wall and the second wall are disposed adjacent to each other, the edge portion is also disposed at an end portion that is of the main body portion and that is close to the third wall, and the edge portion is connected to the third wall.

14. The battery cell according to claim 13, wherein the wall thickness of the third wall is greater than the wall thickness of the second wall, and the electrode terminal is disposed on the third wall.

15. A battery, comprising the battery cell according to any one of claims 1 to 14.

16. An electric apparatus, comprising the battery cell according to any one of claims 1 to 14 or the battery according to claim 15.

1000

FIG. 1

FIG. 2

FIG. 3

FIG. 4

21(2001)

201

FIG. 5

A-A

203

201    201

2001a

FIG. 6

FIG. 7

FIG. 8

FIG. 9

## INTERNATIONAL SEARCH REPORT

| International application No. |
|---|
| **PCT/CN2024/084322** |

### A. CLASSIFICATION OF SUBJECT MATTER

H01M50/103(2021.01)i; H01M50/258(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; CNKI: 电池, 壳, 壁, 厚度, 大于, 渐变, 第一, 第二, 倒角, 过渡圆, battery, cell, shell, case, wall, thickness, grade, first, second, chamfer, transition, circle

### C. DOCUMENTS CONSIDERED TO BE RELEVANT

| Category* | Citation of document, with indication, where appropriate, of the relevant passages | Relevant to claim No. |
|---|---|---|
| X | US 6746798 B1 (SONY CORP.) 08 June 2004 (2004-06-08) description, column 4, line 15 to column 8, line 24, and figure 5 | 1-4, 12-16 |
| Y | US 6746798 B1 (SONY CORP.) 08 June 2004 (2004-06-08) description, column 4, line 15 to column 8, line 24, and figure 5 | 5-11 |
| Y | CN 219144330 U (CONTEMPORARY AMPEREX TECHNOLOGY CO., LTD.) 06 June 2023 (2023-06-06) description, paragraphs 75-175, and figures 1-12 | 5-11 |
| X | KR 20060027263 A (SAMSUNG SDI CO., LTD.) 27 March 2006 (2006-03-27) description, pages 2-5, and figure 1 | 1-4, 12-16 |
| X | JP 2016066583 A (KOBE STEEL LTD.) 28 April 2016 (2016-04-28) description, paragraphs 9-70, and figures 1-5 | 1-4, 12-16 |
| X | CN 210668495 U (SHENZHEN KEDALI INDUSTRY CO., LTD.) 02 June 2020 (2020-06-02) description, paragraphs 6-40, and figures 1-3 | 1-4, 12-16 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **07 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/084322** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 217158363 U (CONTEMPORARY AMPEREX TECHNOLOGY CO., LTD.) 09 August 2022 (2022-08-09)<br>    entire document | 1-16 |
| A | CN 218731319 U (SUZHOU SLAC PRECISION EQUIPMENT CO., LTD.) 24 March 2023 (2023-03-24)<br>    entire document | 1-16 |

Form PCT/ISA/210 (second sheet) (July 2022)

**INTERNATIONAL SEARCH REPORT**
Information on patent family members

International application No.

**PCT/CN2024/084322**

| Patent document cited in search report | | | Publication date (day/month/year) | Patent family member(s) | | | Publication date (day/month/year) |
|---|---|---|---|---|---|---|---|
| US | 6746798 | B1 | 08 June 2004 | KR | 20000069844 | A | 25 November 2000 |
| | | | | EP | 0973211 | A1 | 19 January 2000 |
| | | | | EP | 0973211 | A4 | 26 May 2004 |
| | | | | WO | 9925036 | A1 | 20 May 1999 |
| CN | 219144330 | U | 06 June 2023 | None | | | |
| KR | 20060027263 | A | 27 March 2006 | KR | 100646541 | B1 | 23 November 2006 |
| JP | 2016066583 | A | 28 April 2016 | JP | 6030178 | B2 | 24 November 2016 |
| | | | | KR | 20170028422 | A | 13 March 2017 |
| | | | | KR | 101902132 | B1 | 27 September 2018 |
| CN | 210668495 | U | 02 June 2020 | None | | | |
| CN | 217158363 | U | 09 August 2022 | None | | | |
| CN | 218731319 | U | 24 March 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322476888